# FASCICULE DE BREVET EUROPEEN

(11) **EP 0 382 597 B1**
(45) Date de publication et mention de la délivrance du brevet: **01.09.1993**
(21) Numéro de dépôt: 90400238.3
(22) Date de dépôt: 29.01.1990
(51) Int. Cl.: H02G 3/04

(54) **Profilé, tel que goulotte, plinthe, moulure ou autre, pour le logement et la protection, en particulier, d'appareillages électriques et des conducteurs nécessaires à la desserte de ceux-ci**
Profileisen, wie Rinne, Fussleiste, Wandleiste oder dergleichen, als Gehäuse und zum Schützen von elektrischen Geräten und Kabeln für ihre Versorgung
Extruded section, such as a gutter, plinth, trunking or the like, for accommodation and protection, in particular of electrical devices and supply leads

(30) Priorité: 07.02.1989 FR 8901534
(43) Date de publication de la demande: 16.08.1990
(73) Titulaire: LEGRAND, F-87045 Limoges Cédex (FR)
(72) Inventeur: Goussin, Vincent, F-53160 Bais (FR); Lajat, Nathalie, F-72650 La Milesse (FR)
(74) Mandataire: CABINET BONNET-THIRION

(56) Documents cités:
- WO-A-81/00793
- DE-A- 2 018 139
- FR-A- 2 473 226

## Description

La présente invention concerne d'une manière générale les profilés qui, sous les désignations, par exemple, de goulottes, de moulures, ou de plinthes, sont usuellement mis en oeuvre pour le logement et la protection de quelconques appareillages, et, en particulier d'appareillages électriques et des conducteurs nécessaires à la desserte de ceux-ci, notamment lorsque ces appareillages sont à rapporter sur un mur ou sur une quelconque autre surface de support.

D'une manière générale, ces profilés, qui sont en pratique réalisés par extrusion, en matière synthétique ou en métal, comportent, de manière distincte, d'une part, un corps, dont la section a globalement un profil en U, avec un fond et deux ailes latérales, et, d'autre part, des moyens de fermeture propres à s'étendre transversalement d'une des ailes latérales de ce corps à l'autre, à l'extrémité libre de celles-ci.

Il est usuel de prévoir, en saillie, longitudinalement, sur le fond du corps de tels profilés, au moins une nervure propre à permettre d'y rapporter un quelconque accessoire, et, par exemple, de quelconques pattes aptes à permettre la fixation des appareillages concernés, ou de quelconques boîtes propres au logement de ceux-ci.

Accessoirement, ces nervures peuvent constituer des rails qui, tels par exemple les rails normalisés EN 500 35, ou EN 500 22, sont propres à servir directement de support à ces appareillages, par simple encliquetage de ceux-ci.

Dans tous les cas ces nervures courent, normalement, par construction, sur toute la longueur du corps qui les comporte.

Il est usuel, également, au moins dans certains profilés, de prévoir, en saillie, longitudinalement, sur ce fond, des cloisons propres à compartimenter le volume intérieur d'un tel corps, en vue, par exemple, d'une séparation des appareillages nécessitant des courants forts vis-à-vis de ceux se satisfaisant de courants faibles.

Mais, à ce jour, ces cloisons sont le plus souvent rigidement assujetties au fond qu'elles équipent, en venant d'un seul tenant de celui-ci.

Il en résulte que la configuration de la division en compartiments du volume intérieur du corps de tels profilés se trouve rigidement fixée une fois pour toutes, sans possibilité de modification, et donc, sans possibilité d'adaptation aux nécessités du moment.

Conjointement, les moyens de fermeture associés à un tel corps sont usuellement constitués à ce jour par un couvercle unique qui s'étend d'un seul tenant de l'une à l'autre de ses ailes latérales.

Il en résulte, notamment, que la dépose de ce couvercle, nécessaire, par exemple, pour avoir accès à l'un des compartiments intérieurs du corps donne également accès, sans nécessité, et au détriment de la sécurité, aux autres compartiments intérieurs de celui-ci.

Dans le document FR-A-2.473.226, il est décrit la mise en oeuvre de cloisons amovibles qui, par un pied, sont aptes à être rapportées sur une nervure du fond du corps, et qui, au niveau de leur tête, sont à relier transversalement les unes aux autres par des organes, appelés "sous-couvercle", mais ne constituant plus vraisemblablement que de simples entretoises propres au maintien de ces cloisons, l'ensemble restant à coiffer de manière traditionnelle par un couvercle.

En toute hypothèse, les moyens d'emboîtement dont sont dotées ces cloisons amovibles pour coopération avec les "sous-couvercles" sont de types différents de ceux dont sont par ailleurs dotées les ailes latérales du corps concerné pour coopération avec le couvercle, et, en pratique, ils sont de type opposé à celui de ceux-ci.

Autrement dit, dans ce document FR-A-2.473.226, le couvercle ne peut pas coopérer en emboîtement avec les cloisons amovibles mises en oeuvre.

En outre, les "sous-couvercles" associés à celles-ci sont tous identiques, ce qui limite les configurations possibles pour l'implantation de ces cloisons amovibles.

La présente invention a d'une manière générale pour objet un profilé exempt de cet inconvénient et présentant en outre d'autres avantages.

De manière plus précise, elle a pour objet un profilé, tel que goulotte, plinthe, moulure ou autre, comportant, en combinaison un corps dont la section a globalement un profil en U, avec un fond et deux ailes latérales, avec, en saillie, longitudinalement, sur le fond dudit corps, au moins une nervure, au moins une cloison amovible comportant un pied par lequel elle est adaptée à être rapportée sur une nervure du fond du corps, et des moyens de fermeture pour le corps, lesdits moyens de fermeture comportant un couvercle à établir d'une des ailes latérales à l'autre du corps, et au moins un jeu d'au moins deux couvercles, à établir chacun respectivement de l'une des deux ailes latérales dudit corps à la tête de ladite cloison amovible, ou de la tête d'une telle cloison amovible à celle d'une autre cloison amovible, en substitution au couvercle, et à un même niveau que celui-ci, les ailes latérales du corps étant chacune munies d'un moyen d'emboîtement pour coopération en encliquetage avec un moyen d'emboîtement complémentaire prévu à cet effet sur chacun desdits couvercles, et la tête de la cloison amovible comportant, côte à côte, longitudinalement, de manière jumelée, deux moyens d'emboîtement de même type que celui desdites ailes latérales.

En pratique, cette cloison amovible n'est mise en place qu'en cas de nécessité, et les deux compartiments qu'elle délimite peuvent alors bénéficier chacun d'un couvercle individuel, en sorte qu'il est possible d'avoir accès à l'un sans avoir nécessairement accès à l'autre.

En pratique, également, le fond du corps présente en saillie plusieurs nervures identiques disposées parallèlement les unes aux autres, et, préférentiellement, ces nervures sont établies suivant un pas régulier.

Ainsi, plusieurs configurations sont envisageables pour l'implantation d'une ou plusieurs cloisons amovibles, ce qui confère avantageusement au profilé suivant l'invention une grande souplesse d'adaptation à des conditions particulières d'utilisation.

Suivant un deuxième aspect, le profilé suivant l'invention est encore caractérisé en ce qu'il est en outre associé à son corps, en tant qu'accessoire, lorsque le fond de ce corps présente en saillie plusieurs nervures, au moins une platine, qui comporte des jambages par lesquels elle est adaptée à être rapportée sur deux nervures distinctes de ce fond, d'une de ces nervures à l'autre, et qui est apte à porter un rail du type de ceux propres à servir de support à un quelconque appareillage, soit que ce rail forme une pièce distincte de cette platine et soit dûment rapporté sur celle-ci, soit que, de manière préférée, il forme une seule et même pièce avec elle.

Au lieu de courir systématiquement sur toute la longueur du corps du profilé, cette platine, et le rail qu'elle porte, peuvent au contraire n'intervenir avantageusement que localement, là où il est nécessaire d'implanter un quelconque appareillage.

Il en résulte un avantageux gain de matière.

Il en résulte également un avantageux gain d'espace, au bénéfice, par exemple, de l'implantation des conducteurs électriques nécessaires.

Si désiré, les ailes du rail ainsi mis en oeuvre peuvent présenter, chacune, de place en place, des perforations, pour le passage, par exemple, d'un quelconque collier de serrage ou d'un quelconque autre lien de nature à permettre d'y assujettir en faisceau les conducteurs électriques correspondants.

Ainsi qu'il est aisé de le comprendre, il est beaucoup plus facile de façonner ces perforations lorsque ce rail est ainsi porté par une platine distincte que lorsqu' il est directement porté par le fond du corps du profilé concerné, les ailes latérales de ce corps, qui l'encadrent alors, ne pouvant manquer d'être une gêne pour l'outillage correspondant.

De préférence, les dispositions sont telles que, quelle que soit l'implantation d'une telle platine, le rail qu'elle porte est centré par rapport au couvercle correspondant.

Ainsi l'appareillage porté par un tel rail est lui-même systématiquement centré par rapport à ce couvercle, au bénéfice de l'esthétique de l'ensemble.

Les caractéristiques et avantages de l'invention ressortiront d'ailleurs de la description qui va suivre, à titre d'exemple, en référence aux dessins schématiques annexés sur lesquels :
la figure 1 est une vue en perspective partielle du corps d'un profilé suivant l'invention ;
la figure 2 est une vue en perspective partielle d'une cloison amovible associée à ce profilé ;
les figures 3 et 4 sont, à échelle supérieure, des vues partielles en coupe transversale de cette cloison amovible, suivant, chacune respectivement, les lignes III-III et IV-IV de la figure 2 ;
la figure 5 est une vue en perspective partielle d'une platine, avec rail, également associée au corps du profilé suivant l'invention ;
la figure 6 est une vue de bout d'un profilé suivant l'invention, suivant une première configuration possible pour celui-ci ;
les figures 7 et 8 sont des vues de bout analogues à celle de la figure 6, pour deux autres configurations possibles pour le profilé suivant l'invention ;
la figure 9 est une vue en coupe d'une forme préférée de réalisation de nervure.

Tel qu'illustré sur ces figures, le profilé suivant l'invention comporte un corps 10 dont la section transversale a globalement un profil en U, avec un fond 11 et deux ailes latérales 12.

Dans la forme de réalisation représentée, les ailes latérales 12 s'étendent, globalement, perpendiculairement au fond 11, en se raccordant toutefois, chacune, à celui-ci, suivant un aspect de l'invention, par un pan coupé 13, qui s'étend en oblique d'une telle aile latérale 12 à un tel fond 11, et, à leur extrémité libre, elles présentent, chacune, parallèlement au fond 11, et en direction l'une de l'autre, un retour en équerre 14 dont le bord libre est conformé de manière à constituer un moyen d'emboîtement 15.

En pratique, ce moyen d'emboîtement 15 est constitué par une gouttière dont le débouché a, transversalement, une largeur inférieure à celle de sa partie courante, une saillie 17, prévue à cet effet, refermant partiellement ce débouché du côté de l'aile latérale 12 concernée.

Sur le fond 11 est prévu, longitudinalement, en saillie, au moins une nervure 19 propre à permettre de rapporter, sur ce fond, un quelconque accessoire.

Suivant un aspect de l'invention, le fond 11 du corps 10 présente, ainsi, longitudinalement, en saillie, plusieurs nervures 19 identiques, qui sont disposées parallèlement les unes aux autres, et qui, préférentiellement, et tel que représenté, sont établies suivant un pas P régulier.

Il s'agit, en pratique, de nervures ayant transversalement un profil en T.

Préférentiellement, et pour des raisons qui apparaîtront ci-après, ces nervures 19 sont en nombre impair, et les nervures 19 extrêmes s'étendent chacune à une distance D du bord libre d'extrémité de l'aile latérale 12 correspondante, matérialisé par le plan médian du moyen d'emboîtement 15 que forme celui-ci, qui, mesurée transversalement, est égale au pas P de ces nervures 19.

Dans la forme de réalisation représentée, les nervures 19 sont au nombre de sept.

Au corps 10 ainsi constitué sont associés, de manière usuelle, des moyens de fermeture propres à s'étendre transversalement d'une de ses ailes latérales 12 à l'autre.

Par exemple, et tel que représenté à la figure 6, il peut s'agir d'un couvercle 20 unique, propre à être établi d'un seul tenant d'une de ces ailes latérales 12 à l'autre.

Pour son encliquetage sur le corps 10, ce couvercle 20 est muni, le long de chacun de ses bords, d'un moyen d'emboîtement 21 complémentaire du moyen d'emboîtement 15 prévu le long du bord libre correspondant des ailes latérales 12 de ce corps 10.

Il s'agit, donc, en l'espèce, d'un bourrelet dont l'engagement dans la gouttière que constitue un moyen d'emboîtement 15 se fait à la faveur d'une déformation élastique de celle-ci.

Les dispositions correspondantes sont bien connues par elles-mêmes, et ne faisant pas partie en soi de la présente invention, elles ne seront pas décrites plus en détail ici.

De manière également connue en soi, il est associé, au corps 10, en tant qu'accessoire à rapporter sur une nervure 19, au moins une cloison amovible 23, qui comporte un pied 24 par lequel elle est adaptée à être rapportée, en pratique par simple encliquetage, sur une telle nervure 19.

Suivant l'invention, il est en outre associé, à ce corps 10, en tant que moyens de fermeture à substituer si désiré au couvercle 20, au même niveau que celui-ci au moins un jeu d'au moins deux couvercles 20', 20'' distincts, qui sont adaptés à être chacun respectivement établis de l'une des deux ailes latérales 12 de ce corps 10 à la tête 25 de ladite cloison amovible 23, et/ou de la tête 25 d'une telle cloison amovible 23 à celle d'une autre cloison amovible 23.

En pratique, la tête 25 de la cloison amovible 23 comporte, côte à côte, longitudinalement, de manière jumelée, deux moyens d'emboîtement 15, qui, propres chacun à coopérer en encliquetage avec un moyen d'emboîtement complémentaire 21 prévu à cet effet sur chacun des couvercles 20', 20'', sont de même type que celui prévu sur chacune des ailes latérales 12 du corps 10.

Comme précédemment, chacun de ces moyens d'emboîtement 15 est donc constitué par une gouttière, dont le débouché a transversalement une largeur inférieure à celle de sa partie courante, ce débouché étant partiellement refermé par une saillie 17.

En pratique, d'un de ces moyens d'emboîtement 15 à l'autre, les saillies 17 sont dos à dos, sur une paroi médiane 26 commune aux deux gouttières correspondantes.

En pratique, également, le pied 24 de la cloison amovible 23 est formé de deux jambages 27, qui s'étendent parallèlement l'un à l'autre, et qui, le long de leur bord libre, présentent, chacun, en saillie, en direction l'un de l'autre, un bourrelet 28.

De son pied 24 à sa tête 25, la cloison amovible 23 forme un simple flasque 29.

Dans la forme de réalisation représentée, ce flasque 29 est évidé, et la paroi médiane 26 de la tête 25 associée s'étend dans le prolongement de l'évidement correspondant.

Quoi qu'il en soit, et ainsi qu'il est aisé de le comprendre, la cloison amovible 23 suivant l'invention constitue elle aussi un profilé.

Tel que représenté à la figure 7, elle est apte à s'encliqueter, par son pied 24, sur l'une quelconque des nervures 19 du corps 10, par exemple, tel que représenté, sur l'une des nervures 19 adjacentes aux nervures 19 extrêmes.

Du fait du profil en T de ses nervures, son sens de montage est avantageusement indifférent.

Sa hauteur, par ailleurs, est telle que les moyens d'emboîtement 15 dont est dotée sa tête 25 se trouvent alors à niveau avec les moyens d'emboîtement 15 des ailes latérales 12 du corps 10.

La cloison amovible 23 ainsi implantée divise dès lors le volume intérieur de ce corps 10 en deux compartiments 30', 30'' inégaux.

De préférence, il en est ainsi sur toute la longueur du corps 10, soit que la cloison amovible 23 ait même longueur que celui-ci, soit que plusieurs cloisons amovibles 23, de longueur inférieure, soient mises bout à bout à cet effet.

Quoi qu'il en soit, les couvercles 20', 20'', dûment dimensionnés en conséquence, ferment alors avantageusement individuellement les deux compartiments 30', 30'' ainsi délimités dans le corps 10.

D'un côté, ces couvercles 20', 20'' sont en prise avec le moyen d'emboîtement 15 de l'aile latérale 12 correspondante du corps 10, et, de l'autre, ils sont en prise avec le moyen d'emboîtement 15 correspondant de la cloison amovible 23.

Il résulte de ce qui précède que les couvercles 20', 20'' sont de largeurs différentes, la somme de ces largeurs correspondant globalement à la largeur du couvercle 20 précédent.

En variante, et tel que représenté à la figure 8, il peut être mis en oeuvre un deuxième jeu de deux couvercles 20''' de même largeur, et donc de couvercles 20''', qui, au lieu d'être distincts, comme précédemment, sont identiques l'un à l'autre, la cloison amovible 23 étant alors implantée sur la nervure 19 médiane du corps 10 et partageant ainsi en deux compartiments 30''' égaux le volume intérieur de celui-ci.

Mais, bien entendu, d'autres configurations sont possibles pour l'implantation de cette cloison amovible 23, et, conjointement, pour les largeurs respectives des couvercles alors à mettre à oeuvre.

Eu égard au nombre de nervures 19 présentes sur le fond 11 du corps 10, il peut même être envisagé l'implantation de deux ou plusieurs cloisons amovibles 23, le jeu de couvercles correspondants comportant alors plusieurs couvercles 20'', avec, éventuellement, un couvercle 20'''.

Par exemple, pour une division en trois compartiments, avec deux cloisons amovibles 23, du volume intérieur du corps 10, il est mis en oeuvre un jeu de trois couvercles, à savoir deux couvercles 20'' et un couvercle 20''' (non représenté).

En variante, pour une division en quatre compartiments, alors tous égaux, de ce volume intérieur, il est mis en oeuvre, avec trois cloisons amovibles 23, un jeu de quatre couvercles 20''' (non représenté).

Dans de tels cas, l'un au moins des couvercles 20'', 20''' ainsi mis en oeuvre s'étend de la tête 25 d'une cloison amovible 23 à celle d'une autre cloison amovible 23.

En bref, au corps 10 du profilé suivant l'invention, peuvent être associés au moins deux jeux d'au moins deux couvercles différents, c'est-à-dire au moins deux jeux différents de deux couvercles distincts ou non.

Tous ces couvercles sont alors dotés, le long de leurs bords, de moyens d'emboîtement de même type.

Chacun de ces divers couvercles peut servir de son côté de couvercle de base pour un profilé de largeur correspondante.

Suivant l'invention, il peut en outre être associé à ce corps 10, en tant qu'accessoire, au moins une platine 32, qui comporte des jambages 33 par lesquels elle est adaptée à être rapportée sur deux nervures 19 distinctes du fond 11 de ce corps 10, d'une de ces nervures 19 à l'autre, et qui est apte à porter un rail 34 du type de ceux propres à servir de support à un quelconque appareillage, et, par exemple, à un quelconque appareillage électrique, non représenté.

Pour coopération, en encliquetage, avec des nervures 19 du corps 10, les jambages 33 de cette platine 32 présentent chacun, en saillie, en direction l'un de l'autre, sur leur face interne, un bourrelet 35.

Dans la forme de réalisation représentée, ils présentent, en outre, à leur extrémité libre, du côté de leur face externe, pour leur raidissement, un retour en U 36. Cette forme des jambages 33 permet de faciliter, au moyen d'un outil, par exemple la lame d'un simple tournevis, le désencliquetage de la platine 32.

De préférence, et tel que représenté, la platine 32 a une largeur suffisante pour être à même de coiffer un nombre impair de nervures 19.

Dans la forme de réalisation représentée, ce nombre est égal à trois.

Quoi qu'il en soit, il est, préférentiellement, inférieur de plus de la moitié au nombre total de nervures 19, pour favoriser la diversité des implantations possibles de la platine 32 sur ces nervures 19.

Dans la forme de réalisation représentée, le rail 34 porté par la platine 32 forme une seule et même pièce 37 avec cette platine 32 et ses jambages 33.

De manière connue en soi, ce rail 34 comporte, parallèlement l'une à l'autre, deux ailes 38, propres à l'encliquetage d'un quelconque appareillage.

En pratique, ces ailes 38 s'étendent parallèlement aux jambages 33 de la platine 32, dans la zone médiane de celle-ci.

Il s'agit, dans la forme de réalisation représentée, d'ailes de hauteur égale qui, à leur extrémité libre, présentent, en direction opposée l'une à l'autre, un retour en équerre 39, le rail 34 qu'elles constituent étant du type des rails normalisés EN 500 22.

Dans la forme de réalisation représentée, ces ailes 38 présentent, chacune, de place en place, des perforations 40.

Nonobstant ces perforations 40, la pièce 37 constitue, elle aussi, un profilé, réalisé par extrusion.

Ce profilé peut avoir la même longueur que celui que constitue le corps 10.

Mais il peut également avoir une longueur différente, en étant par exemple tronçonné a la demande, à partir d'un profilé de longueur supérieure.

Quoi qu'il en soit, les dispositions sont, de préférence, telles que, quelle que soit l'implantation de la platine 32 sur les nervures 19 du corps 10, le rail 34 qu'elle porte est centré par rapport au couvercle 20, 20', 20'' ou 20''' correspondant.

C'est le cas dans la forme de réalisation représentée, en raison de l'implantation adoptée pour les nervures 19 par rapport au bord libre d'extrémité des ailes latérales 12 du corps 10, du nombre, impair, de ces nervures 19, et du nombre, également impair et inférieur au précédent, de ces nervures 19 qu'est susceptible de coiffer simultanément une telle platine 32.

Par exemple, figure 6, lorsqu'un couvercle 20 unique est mis en oeuvre, la platine 32 est implantée sur les trois nervures 19 centrales du corps 10.

Tout appareillage porté par son rail 34 est dès lors bien centré par rapport au couvercle 20.

En variante, figure 7, lorsque, comme représenté, la cloison amovible 23 partage en deux compartiments inégaux 30', 30'' le volume intérieur du corps 10, il subsiste un nombre impair de nervures 19 dans celui de ces compartiments 30', 30'' qui est le plus grand, en l'espèce le compartiment 30', et la platine 32 est alors implantée sur les trois nervures 19 centrales de ce compartiment 30', en sorte que, comme précédemment, tout appareillage porté par son rail 34 se trouve encore centré par rapport au couvercle 20' correspondant.

Lorsque, suivant la figure 8, la cloison amovible 23 partage le volume intérieur du corps 10 en deux compartiments 30''' égaux, il subsiste, dans chacun de ces compartiments 30''', un nombre impair de nervures 19, en l'espèce trois, ce dont il résulte que, lorsqu'une platine 32 est rapportée sur ces nervures 19, tout appareillage rapporté sur le rail 34 que porte une telle platine 32 se trouve, comme précédemment, centré par rapport au couvercle 20''' correspondant.

Ainsi qu'il est aisé de le comprendre, et comme déjà mentionné, les perforations 40 d'une telle platine 32 permettent, si désiré, la mise en place d'un quelconque lien, collier de serrage ou autre, propre à permettre d'y affermir les conducteurs électriques assurant la desserte des appareillages en cause.

Dans la forme de réalisation représentée, ces perforations 40 sont de contour quadrangulaire.

Mais ce contour pourrait bien entendu être différent.

Par ailleurs, et ainsi qu'il est aisé de le comprendre, le pan coupé 13 présent à la base de chacune des ailes latérales 12 du corps 10 constitue avantageusement un "joint creux" propre à absorber avantageusement, au bénéfice de l'esthétique de l'ensemble, la coupe, éventuellement inégale, d'un quelconque habillage appliqué à une telle aile latérale 12.

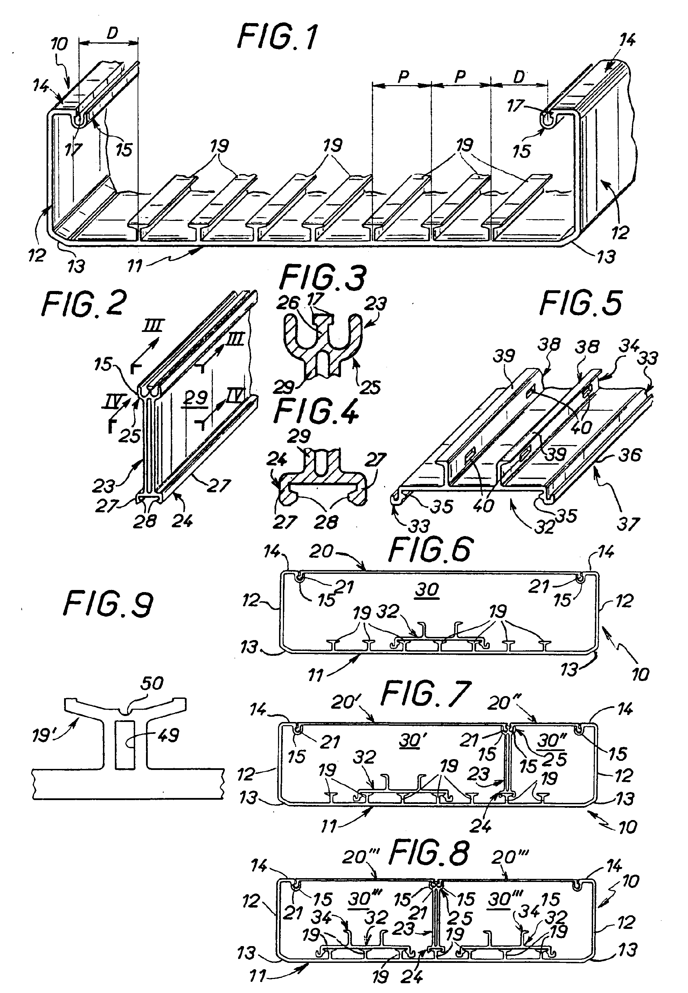

La figure 9 montre une forme préférée de réalisation pour les nervures 19 : il s'agit de nervures 19' de type dit alvéolé avec, sur leur hauteur, une double paroi formant un évidement 49, à la manière des cloisons amovibles 23, et, à leur partie supérieure, une paroi s'étendant de part et d'autre d'une empreinte 50 située à l'aplomb dudit évidement 49. Comme déjà évoqué dans le document FR 83 19563, ces nervures 19' peuvent être mises à profit pour la fixation par clouage ou vissage du corps 10 sur un quelconque support.

La présente invention ne se limite d'ailleurs pas aux formes de réalisation et de mise en oeuvre décrites et représentées, mais englobe toute variante d'exécution.

En particulier, la configuration des ailes latérales du corps du profilé, à retour en équerre ou non, est indifférente, et il en est de même pour la nature, femelle ou mâle, du moyen d'emboîtement dont sont dotées ces ailes latérales pour permettre d'y rapporter par encliquetage un quelconque couvercle, aussi bien que pour le nombre et/ou la configuration particulière des nervures portées par le fond de ce corps.

De même, la nature du rail porté par une platine susceptible d'être rapportée sur un nombre, lui-même indifférent, de nervures précédentes est quelconque, ce rail pouvant par exemple tout aussi bien être un rail à ailes de hauteurs inégales du type des rails normalisés EN 500 35.

Il peut par ailleurs être avantageux d'adopter pour le pied 24 des cloisons amovibles 23 un profil semblable à celui des jambages 33 de la platine 32, de façon à faciliter dans ce cas encore le désencliquetage au moyen d'un outil.

Des accessoires usuels, tels que de simples cloisons de séparation du type courant peuvent également se monter tant sur les nervures 19, ou 19', que sur le rail 34.

Quoi qu'il en soit, les divers constituants du profilé suivant l'invention peuvent avantageusement être réalisés en matière synthétique ou en métal, par exemple par extrusion.

## Revendications

1. Profilé, tel que goulotte, plinthe, moulure ou autre, comportant, en combinaison, un corps (10) dont la section a globalement un profil en U, avec un fond (1¹) et deux ailes latérales (12), avec, en saillie, longitudinalement, sur le fond (11) dudit corps (10), au moins une nervure (19, 19'), au moins une cloison amovible (23) comportant un pied (24) par lequel elle est adaptée à être rapportée sur une nervure (19, 19') du fond (11) du corps (10), et des moyens de fermeture pour le corps (10), lesdits moyens de fermeture comportant un couvercle (20) à établir d'une des ailes latérales (12) à l'autre du corps (10), et au moins un jeu d'au moins deux couvercles (20', 20'', 20'''), à établir chacun respectivement de l'une des deux ailes latérales (12) dudit corps (10) à la tête (25) de ladite cloison amovible (23), ou de la tête (25) d'une telle cloison amovible (23) à celle d'une autre cloison amovible (23), en substitution au couvercle (10), et à un même niveau que celui-ci, les ailes latérales (12) du corps (10) étant chacune munies d'un moyen d'emboîtement (15) pour coopération en encliquetage avec un moyen d'emboîtement (21) complémentaire prévu à cet effet sur chacun desdits couvercles (20, 20', 20'', 20'''), et la tête (25) de la cloison amovible (23) comportant, côté à côté, longitudinalement, de manière jumelée, deux moyens d'emboîtement (15) de même type que celui desdits ailes latérales (12).

2. Profilé suivant la revendication 1, caractérisé en ce que les moyens d'emboîtement (15) que présente la tête (25) de la cloison amovible (23) se trouvent à niveau avec les moyens d'emboîtement (15) des ailes latérales (12) du corps (10).

3. Profilé suivant la revendication 1, caractérisé en ce que chacun des deux moyens d'emboîtement (15) que présente la tête (25) de la paroi amovible (23) est constitué par une gouttière dont le débouché a transversalement une largeur inférieure à celle de sa partie courante.

4. Profilé suivant l'une quelconque des revendications 1 à 3, caractérisé en ce que la nervure (19, 19') que présente en saillie le fond (11) du corps (10) a transversalement un profil en T.

5. Profilé suivant la revendication 4, caractérisé en ce que la nervure (19') est de type alvéolé.

6. Profilé suivant l'une quelconque des revendications 1 à 5, caractérisé en ce que le fond (11) du corps (10) présente en saillie plusieurs nervures (19, 19') identiques disposées parallèlement les unes aux autres.

7. Profilé suivant la revendication 6, caractérisé en ce que les nervures (19, 19') présentes en saillie sur le fond (11) du corps (10) sont établies suivant un pas (P) régulier.

8. Profilé suivant l'une quelconque des revendications 6, 7, caractérisé en ce qu'il y a au moins deux jeux d'au moins deux couvercles (20', 20'', 20''') différents.

9. Profilé suivant l'une quelconque des revendications 1 à 8, caractérisé en ce que les couvercles (20', 20'', 20''') sont dotés, le long de leurs bords, de moyens d'emboîtement (21) de même type.

10. Profilé suivant l'une quelconque des revendications 6 à 9, caractérisé en ce qu'il est en outre associé à son corps (10), en tant qu'acessoire, au moins une platine (32), qui comporte des jambages (33) par lesquels elle est adaptée à être rapportée sur deux nervures (19, 19') distinctes du fond (11) du corps (10), d'une de ces nervures (19, 19') à l'autre, et qui est apte à porter un rail (34) du type de ceux propres à servir de support à un quelconque appareillage.

11. Profilé suivant la revendication 10, caractérisé en ce que ledit rail forme une seule et même pièce (37) avec ladite platine (32) et ses jambages (33).

12. Profilé suivant l'une quelconque des revendications 10, 11, caractérisé en ce que les ailes (38) dudit rail (34) de la platine (32) présentent, chacune, de place en place, et en correspondance de l'une à l'autre, des perforations (40).

13. Profilé suivant les revendications 6 et 10, prises conjointement, caractérisé en ce que les dispositions sont telles que, quelle que soit l'implantation de la platine (32), le rail (34) qu'elle porte est centré par rapport au couvercle (20, 20', 20'', 20''') correspondant.

14. Profilé suivant la revendication 13, caractérisé en ce qu'il y a un nombre impair de nervures (19, 19') en saillie sur le fond (11) du corps (10), la platine (32) porteuse du rail (34) est elle-même apte à coiffer un nombre impair de telles nervures (19, 19') inférieur de plus de la moitié au précédent, et les nervures (19, 19') extrêmes s'étendent chacune à une distance (D) du bord libre d'extrémité de l'aile latérale (12) correspondante dudit corps (10), qui, mesurée transversalement, est égale au pas (P) desdites nervures (19, 19').

15. Profilé suivant l'une quelconque des revendications 1 à 14, caractérisé en ce que chacune des ailes latérales (12) du corps (10) se raccorde au fond (11) de celui-ci par un pan coupé (13) qui s'étend en oblique d'une telle aile latérale (12) audit fond (11).

## Patentansprüche

1. Profil, wie Rinne, Fußleiste, Wandleiste oder anderes, umfassend in Kombination einen Körper (10), dessen Querschnitt im wesentlichen ein U-Profil besitzt, mit einem Boden (11), zwei seitlichen Schenkeln (12) und in Längsrichtung auf den Boden (11) des Körpers (10) hervorstehend wenigstens einer Rippe (19, 19'), wenigstens eine abnehmbare Trennwand (23), die einen Fuß (24) umfaßt, über den sie auf einer Rippe (19, 19') des Bodens (11) des Körpers (10) angebracht werden kann, und Verschlußmittel für den Körper (10), die einen Deckel (20), der von einem der seitlichen Schenkel (12) des Körpers (10) zum anderen anzuordnen ist, und wenigstens einen Satz von wenigstens zwei Deckeln (20', 20'', 20''') umfaßt, die jeweils von dem einen der beiden seitlichen Schenkel (12) des Körpers (10) zum Kopf (25) der abnehmbaren Trennwand (23) oder vom Kopf (25) einer solchen abnehmbaren Trennwand (23) zu dem einer anderen abnehmbaren Trennwand (23) als Ersatz für den Deckel (10) und in einer gleichen Höhe wie dieser anzuordnen sind, wobei die seitlichen Schenkel (12) des Körpers (10) jeweils mit einem Einsteckmittel (15) zum Zusammenwirken mit einem ergänzenden, zu diesem Zweck auf jedem der Deckel (20, 20', 20'', 20''') vorgesehenen Einsteckmittel (21) durch Einklinkung versehen ist und der Kopf (25) der abnehmbaren Trennwand (23) nebeneinander in Längsrichtung paarweise zwei Einsteckmittel (15) vom selben Typ wie die der seitlichen Schenkel (12) umfaßt.

2. Profil nach Anspruch 1, dadurch gekennzeichnet, daß die Einsteckmittel (15), die der Kopf (25) der abnehmbaren Trennwand (23) aufweist, sich in einer Höhe mit den Einsteckmitteln (15) der seitlichen Schenkel (12) des Körpers (10) befinden.

3. Profil nach Anspruch 1, dadurch gekennzeichnet, daß jedes der beiden Einsteckmittel (15), die der Kopf (25) der abnehmbaren Wand (23) besitzt, aus einer Rinne besteht, deren Mündung in Querrichtung eine kleinere Breite als ihr laufender Teil hat.

4. Profil nach einem der Ansprüche 1 bis 3, dadurch gekennzeichnet, daß die Rippe (19, 19'), die der Boden (11) des Körpers (10) hervorstehend aufweist, in Querrichtung ein T-Profil hat.

5. Profil nach Anspruch 4, dadurch gekennzeichnet, daß die Rippe (19') vom Zellentyp ist.

6. Profil nach einem der Ansprüche 1 bis 5, dadurch gekennzeichnet, daß der Boden (11) des Körpers (10) hervorstehend mehrere identische Rippen (19, 19') besitzt, die zueinander parallel angeordnet sind.

7. Profil nach Anspruch 6, dadurch gekennzeichnet, daß die auf den Boden (11) des Körpers (10) hervorstehenden Rippen (19, 19') in einem regelmäßigen Schritt (P) angeordnet sind.

8. Profil nach einem der Ansprüche 6, 7, dadurch gekennzeichnet, daß wenigstens zwei Sätze von wenigstens zwei verschiedenen Deckeln (20', 20'', 20''') vorgesehen sind.

9. Profil nach einem der Ansprüche 1 bis 8, dadurch gekennzeichnet, daß die Deckel (20', 20'', 20''') längs ihrer Ränder mit Einsteckmitteln (21) vom selben Typ ausgerüstet sind.

10. Profil nach einem der Ansprüche 6 bis 9, dadurch gekennzeichnet, daß seinem Körper (10) außerdem als Zubehörteil wenigstens eine Platine (32) zugeordnet ist, die Schenkel (33) umfaßt, durch die sie auf zwei getrennten Rippen (19, 19') des Bodens (11) des Körpers (10) von einer dieser Rippen (19, 19') zur anderen angebracht werden kann, und die eine Schiene (34) von dem Typ Schienen tragen kann, die als Träger für ein beliebiges Gerät dienen können.

11. Profil nach Anspruch 10, dadurch gekennzeichnet, daß die Schiene mit der Platine (32) und ihren Füßen (33) ein einziges Stück (37) bildet.

12. Profil nach einem der Ansprüche 10, 11, dadurch gekennzeichnet, daß die Schenkel (38) der Schiene (34) der Platine (32) jeweils von Stelle zu Stelle und in gegenseitiger Entsprechung Perforationen (40) aufweisen.

13. Profil nach den Ansprüchen 6 und 10 zusammen, dadurch gekennzeichnet, daß die Anordnungen so gewählt sind, daß die Schiene (34), die die Platine (32) trägt, bei jeder beliebigen Anordnung der Platine (32) bezüglich des entsprechenden Deckels (20, 20', 20'', 20''') zentriert ist.

14. Profil nach Anspruch 13, dadurch gekennzeichnet, daß eine ungerade Anzahl von Rippen (19, 19') auf dem Boden (11) des Körpers (10) hervorstehend vorgesehen ist, daß die die Schiene, (34) tragende Platine (32) ihrerseits eine ungerade Anzahl solcher Rippen (19, 19') abdecken kann, die um mehr als die Hälfte kleiner als die vorhergehende ist, und daß die äußersten Rippen (19, 19') sich jeweils vom freien Ende des entsprechenden seitlichen Schenkels (12) dieses Körpers (10) in einem bestand (D) erstrecken, der, in Querrichtung gemessen, gleich dem Schritt (P) der Rippen (19, 19') ist.

15. Profil nach einem der Ansprüche 1 bis 14, dadurch gekennzeichnet, daß jeder der seitlichen Schenkel (12) des Körpers (10) an dessen Boden (11) über eine schräge Kante (13) anschließt, die sich schräg von einem solchen seitlichen Schenkel (12) zu diesem Boden (11) erstreckt.

## Claims

1. A shaped member such as a channel, skirting board, moulding or the like, comprising in combination a body (10) of rich the section is generally of a U-shaped profile, with a bottom (11) and two side limbs (12), with in projecting relationship and longitudinally on the bottom (11) of said body (10) at least one rib (19, 19'), at least one removable partition (25) comprising a base portion (24) by way of rich it is adapted to be fitted on to a rib (19, 19') of the bottom (11) of the body (10), and closure means for the body (10), said closure means comprising a cover (20) to be fitted in position from one of the side limbs (12) of the body (10) to the other, and at least one set of at least two covers (20', 20'', 20''') which are each to be fitted in position respectively from one of the two side limbs (12) of said body (10) to the top portion (25) of said removable partition (23) or from the top portion (25) of such a removable partition (23) to that of another removable partition (23) in place of the cover (20), and at the same level as same, the side limbs (12) of the body (10) each being provided with an engagement means (15) for latching co-operation with a complementary engagement means (21) provided for that purpose on each of said covers (20, 20', 20'', 20''') and the top portion (25) of the removable partition (23) comprising longitudinally in paired side-byside relationship two engagement means (15) of the same type as that of said side limbs (12).

2. A shaped member according to claim 1 characterised in that the engagement means (15) on the top portion (25) of the removable partition (23) are disposed level with the engagement means (15) of the side limbs (12) of the body (10).

3. A shaped member according to claim 1 characterised in that each of the two engagement means (15) on the top portion (25) of the removable wall (23) is formed by a groove rose mouth opening is transversely of a width rich is less than that of its main body portion.

4. A shaped member according to any one of claims 1 to 3 characterised in that the rib ( 19, 19') rich is provided in projecting relationship on the bottom (11) of the body (10) is transversely of T-shaped configuration.

5. A shaped member according to claim 4 characterised in that the rib (19') is of chamber-forming type.

6. A shaped member according to any one of claims 1 to 5 characterised in that the bottom (11) of the body (10) is provided in projecting relationship with a plurality of identical ribs (19, 19') rich are disposed parallel to each other.

7. A shaped member according to claim 6 characterised in that the ribs (19, 19') disposed in projecting relationship on the bottom (11) of the body (10) are arranged at a regular pitch (P).

8. A shaped member according to either one of claims 6 and 7 characterised in that there are at least two sets of at least two different covers (20', 20'', 20''').

9. A shaped member according to any one of claims 1 to 8 characterised in that the covers (20', 20'', 20''') are provided along their edges with engagement means (21) of the same type.

10. A shaped member according to any one of claims 6 to 9 characterised in that there is also associated with its body (10) as an accessory member at least one plate member (32) comprising leg portions (33) by way of which it is adapted to be fitted to two different ribs (19, 19') of the bottom (11) of the body (10), from one of said ribs (19, 19') to the other, rich plate member is capable of carrying a rail (34) of the type of those rich are suitable for serving as a support for any item of equipment.

11. A shaped member according to claim 10 characterised in that said rail forms one piece (37) with said plate member (32) and its leg portions (33).

12. A shaped member according to either one of claims 10 and 11 characterised in that the limbs (38) of said rail (34) of the plate member (32) are each provided with perforations (40) at spaced mutually corresponding positions.

13. A shaped member according to claims 6 and 10 in combination characterised in that the arrangements are such that, irrespective of the way in rich the plate member (32) is fitted, the rail (34) that it carries is centered with respect to the corresponding cover (20, 20', 20'', 20''').

14. A shaped member according to claim 13 characterised in that there is an odd number of ribs (19, 19') projecting from the bottom (11) of the body (10), the plate member (32) rich carries the rail (34) is itself designed to fit over an odd number of such ribs (19, 19') rich is smaller by more than half than the preceding number, and the end ribs (19, 19') each extend at a distance (D) from the free end edge of the corresponding side limb (12) of said body (10), rich, measured transversely, is equal to the pitch (P) of said ribs (19, 19').

15. A shaped member according to any one of claims 1 to 14 characterised in that each of the side limbs (12) of the body (10) is connected to the bottom (11) thereof by means of a cut-off comer surface (13) which extends inclinedly from such a side limb (12) to said bottom (11).
